# EUROPEAN PATENT SPECIFICATION

(11) **EP 3 323 683 B1**
(45) Date of publication and mention of the grant of the patent: **14.08.2019**
(21) Application number: 16199451.2
(22) Date of filing: 18.11.2016
(51) Int. Cl.: B60R 21/38, E05D 3/14, E05D 3/18

(54) **HINGE ARRANGEMENT**
SCHARNIERANORDNUNG
AGENCEMENT DE CHARNIÈRE

(43) Date of publication of application: 23.05.2018
(73) Proprietor: Volvo Car Corporation, 40 531 Göteborg (SE)
(72) Inventor: Jaktling, Mr. Staffan, 42656 Västra Frölunda (SE); Aicken, Richard, 43496 KUNGSBACKA (SE)
(74) Representative: Kransell & Wennborg KB

(56) References cited:
- EP-A2- 1 882 617
- DE-A1- 10 314 968
- DE-A1-102004 034 669

## Description

### TECHNICAL FIELD

The present disclosure relates to a hinge arrangement for a bonnet of a vehicle. The disclosure further relates to a bonnet arrangement comprising such a hinge arrangement, to a vehicle and to a method of displacing a bonnet of the bonnet arrangement to a deployed position.

### BACKGROUND

If a motor vehicle, such as a car, is involved in an accident in which the front part of the vehicle hits a vulnerable road user, such as a pedestrian or a cyclist, it is not uncommon that the head of the vulnerable road user impacts on the bonnet of the vehicle. The vulnerable road user may in that case be severely injured. One parameter, which can affect the severity of the injury, is the fact that the bonnet, which is usually formed from a thin metal sheet, would tend to bend, and then deform on hard engine parts, such as an engine block, located in an engine compartment beneath the bonnet. In order to reduce the severity of these accidents, it is well-known to use a deployable bonnet. By displacing bonnet to a deployed position, also called a pop-up position, e.g. raising the bonnet at least at its rear end, the distance between the bonnet and the hard engine parts is increased, and thereby the consequences of such an impact are mitigated.

The bonnet is in American English known as a hood, but herein the British English term bonnet is used.

Patent document US 2009/0050388 A1 discloses a system configured to lift a bonnet. The system includes: a first mounting member, provided on a rear part of the bonnet; a second mounting member, provided on a body of the vehicle, a connecting member, a detector, configured to detect a collision of the vehicle body with an object, an actuator, configured to lift the rear part of the bonnet when the detector detects the collision, and a stopper, configured to restrict a rising amount of the bonnet.

In the normal state of the hinge arrangement of US 2009/0050388 A1, the actuator extends in a vertically downward direction giving the hinge arrangement a packaging height, defined by the vertical extension of the actuator plus the packaging height of the other components, which is rather high.

### SUMMARY

The object of the present disclosure is to overcome or ameliorate at least one of the disadvantages of the prior art, or to provide a useful alternative.

The object above may be achieved by the subject-matter of claim 1.

Thus, the present invention relates to a hinge arrangement adapted to be located at a front, a rear or a side end portion of a cover of a vehicle. The hinge arrangement is transitable between a normal state and a deployed state. The hinge arrangement comprises a hinge portion adapted to be attached, directly or indirectly, to a body of the vehicle, a hinge arm pivotally connected to the hinge portion, thereby providing a hinged connection for normal opening of the cover, a bracket portion adapted to be attached, directly or indirectly, to the cover, as well as a first deployment arm and a second deployment arm pivotally connecting the bracket portion with the hinge arm. A first part of the first deployment arm is pivotally connected to the bracket portion at a first pivotal connection, and a second part of the first deployment arm is pivotally connected to the hinge arm at a second pivotal connection. A first part of the second deployment arm is pivotally connected to the bracket portion at a third pivotal connection, and a second part of the second deployment arm is pivotally connected to the hinge arm at a fourth pivotal connection. At least one sliding element, e.g. a slot, adapted for sliding of one of the pivotal connections, is located in one of the first deployment arm, the second deployment arm, the bracket portion and the hinge arm at one of the first, second, third and fourth pivotal connections.

The cover may be a bonnet covering an engine compartment at a front end portion of a vehicle, but the cover may also be located at a rear end portion or a side end portion of the vehicle.

Document DE 10 2004 034 669 A1 relates to a hinge having a lifting mechanism for raising the hood towards the rear from a normal position to a person impact protective position when a pneumatic drive supplied from a pressure medium storage device is operated. The pneumatic drive and the pressure storage device are formed as direct components of the hinge.

Document EP 1 882 617 A2 relates to a device for active opening of the bonnet of a motor vehicle in the case of imminent collision. The device has a front sided cover pivot rotatably hinged to a body of a front vehicle at a locked condition in an upward manner. A lifting spring is connected with an associated hinge arrangement such that the pivot is swung up by a vertical and horizontal movement of an active front cover around the lifting spring in a force-controlled manner. The pivot is swung up during lifting the front cover. The pivot consists of a striker that is firmly attached to the front cover.

The cover is displaceable between a closed position, corresponding to the normal state of the hinge arrangement, and a deployed position, corresponding to the deployed state of the hinge arrangement.

The hinge portion of the hinge arrangement provides the hinged connection allowing normal opening of the cover, e.g. to the open position. The hinge portion may comprise a single hinge pivot axis, but it would also be feasible with a multi-link hinged connection comprising a plurality of hinge pivot axes and one or more link arms. The hinge portion may be of any type known in the art. Further, for a multi-link hinged connection, there may be other portions or elements, such as link arms, located between the hinge portion and the hinge arm. The hinge portion may e.g. have a multi-link configuration.

The hinge arrangement has a longitudinal direction, a transverse direction and a vertical direction. When the hinge arrangement as described herein is mounted in a vehicle, the hinge arm is more distal to the body of the vehicle than the hinged connection, i.e. the hinge arm is situated further away from the point of attachment of the hinge arrangement to the body of the vehicle than the hinged connection.

The first deployment arm may be located in front of the second deployment arm, such that the first deployment arm forms a front deployment arm and the second deployment arm forms a rear deployment arm.

The sliding element may be a slot allowing one of the pivotal connections, e.g. a pin, to slide in the slot. One, two, three, four or more of the pivotal connections may have a corresponding sliding element, enabling the pivotal connection to slide. There may also be two sliding elements located at the same pivotal connection, one on or in each of the two elements connected in that pivotal connection.

One, two or all of the first deployment arm, the second deployment arm and the bracket portion may be adapted to slide at the at least one of its pivotal connections.

With a hinge arrangement as described herein, it is possible to decouple the movements occurring within the hinge arrangement during normal opening of the cover, i.e. the hinge arrangement being in its normal state, and the movements occurring within the hinge arrangement during the transition of the hinge arrangement from the normal state to the deployed state from each other, i.e. when the cover is displaced to its deployed position.

This differs from the hinge arrangement described in US 2009/0050388 A1, wherein there is a pivotal movement in the hinged connection located in the hinge portion during the transition of the hinge arrangement between the normal state and the deployed state. Further, the lifting member of US 2009/0050388 A1, i.e. the actuator, extends substantially vertically. Hence the hinged connection is active both during normal opening of the bonnet and during the transition of the hinge arrangement from the normal state to the deployed state.

The configuration of the hinge arrangement as described herein may be selected to obtain a desired low packaging height. Further, the characteristics of the hinge arrangement may be selected to obtain the desired behaviour in the deployed state, e.g. such that the hinge arrangement will collapse in a controllable way, in case a head of a vulnerable road user would impact with the cover.

When the cover is a bonnet, the closed position of the cover is the normal position of the bonnet, which for example is used when driving the vehicle or parking the vehicle. The bonnet then covers the engine compartment. When a sensor of the vehicle has indicated a collision with a vulnerable road user or an imminent collision with a vulnerable road user, the bonnet may be displaced to the deployed position, thereby increasing the distance between the bonnet and the hard engine parts, and hence the consequences of such a collision are mitigated. Preferably the deployed position is located upwards and rearwards as compared to the closed position, but it would also be possible to have a deployed position being straight upwards as compared to the closed position. The directions, i.e. upwards, rearwards and forwards, are defined in relation to the body of the vehicle, assuming it is standing on a horizontal ground. The upward movement direction of the bonnet corresponds to the vertical direction of the hinge arrangement, while the rearwards movement direction of the bonnet corresponds to the longitudinal direction of the hinge arrangement. Preferably, the bonnet is displaceable from the deployed position back to the closed position, such that the bonnet may be restored to the closed position after the deployed position has been activated.

When moving from the closed position to the deployed position, the bonnet may pass an intermediate position. The intermediate position includes raising at least the front end portion of the bonnet. This may be advantageous if the vulnerable road user hits a front portion of the bonnet, which e.g. may be the case if the vulnerable road user is a child or a short person, e.g. being less than 1.2 metres tall. To reach the deployed position, the rear end portion of the bonnet is further raised, and hence the whole bonnet is higher than in the closed position, which helps to reduce the severity of an accident involving a vulnerable road user, such as an adult, being thrown onto the bonnet.

The bonnet may also assume an open position. The open position permits access to the engine compartment of the vehicle e.g. for service, maintenance or repair work. In order to reach the open position, the bonnet is pivoted around the hinged connection with one or more hinge pivot axis/axes extending substantially in the transverse direction of the vehicle at or adjacent to the end portion of the bonnet. The open position of the bonnet arrangement as described herein can be reached without passing the intermediate position and/or the deployed position.

The first deployment arm and the second deployment arm are adapted to control the transition of the hinge arrangement between the normal state and the deployed state. They have a fixed length. The first deployment arm may have a length in the range of from 80 mm to 170 mm, preferably in the range of from 100 mm to 150 mm. The second deployment arm may have a length in the range of from 70 mm to 160 mm, preferably in the range of from 90 mm to 140 mm. The pivotal connections are preferably located at, or adjacent to, end portions of the first deployment arm and the second deployment arm.

The bracket portion may be arranged to be in a fixed position relative to the hinge arm during normal opening of the cover. Only the hinged connection is active, while the first, second, third and fourth pivotal connections are inactive.

Further, the bracket portion may be arranged to be translationally displaced, preferably as a whole, in relation to the hinge arm during the transition of the hinge arrangement between the normal state and the deployed state by a deployment motion comprising pivoting at the first, second, third and fourth pivotal connections and sliding of at least one of the pivotal connections in the at least one sliding element. The hinged connection may then be inactive. As an alternative, also the hinged connection may be active during the transition of the hinge arrangement between the normal state and the deployed state.

The deployment motion may comprise a first phase substantially only comprising pivoting at the first, second, third and fourth pivotal connections and a second subsequent phase also including sliding in the at least one sliding element. The first phase may correspond to the bonnet going to the intermediate position and the second phase may correspond to the bonnet going to the deployed position. Thus, in the second phase, there is pivoting at the first, second, third and fourth pivotal connections as well as sliding at the at least one of the first, second, third and fourth pivotal connections. The pivoting may start for torques above 2 Nm or above 5 Nm. The sliding may start for force levels above 1000 N, preferably above 1500 N, and more preferable above 2000 N.

One of the first deployment arm and the second deployment arm may be arranged to be displaceable by pivoting and sliding by means of the at least one sliding element, and the other of the first deployment arm and the second deployment arm may be arranged to be displaceable by pivoting only.

The first deployment arm may comprise a bend defining a first portion, between the bend and the first pivotal connection and a second portion between the bend and the second pivotal connection. The second portion is substantially parallel to a main plane of the bracket portion when the hinge arrangement assumes the normal state. The main plane of the bracket portion is typically substantially parallel to the surface of the cover, e.g. the bonnet. Thus, if the hinge arrangement is used for a bonnet, the second portion is substantially horizontal, when the hinge arrangement assumes the normal state. The bend is typically located in a mid-portion of the first deployment arm, i.e. spaced apart from the first and second pivotal connections and points away from the hinged connection. The bend may have an angle in the range of 0 °- 90°, preferably in the range of 30 °- 60°. This helps to provide a configuration with a low packaging height. The angle can also be used to control the position of the bonnet in relation to the body of the vehicle in the different positions of the bonnet mentioned herein.

The second deployment arm may comprise a bend defining a first portion, between the bend and the third pivotal connection and a second portion between the bend and the fourth pivotal connection. The first portion is substantially parallel to the main plane of the bracket portion when the hinge arrangement assumes the normal state. Thus, if the hinge arrangement is used for a bonnet, the first portion is substantially horizontal, when the hinge arrangement assumes the normal state. The bend is typically located in a mid-portion of the second deployment arm, i.e. spaced apart from the third and fourth pivotal connections and points towards the hinged connection. The bend may have an angle in the range of 0 °- 90°, preferably in the range of 30°-60°. This helps to provide a configuration with a low packaging height. The angle can also be used to control the position of the bonnet in relation to the body of the vehicle in the different positions of the bonnet mentioned herein.

The first portion of the second deployment arm may be located parallel with, or substantially parallel with, the second portion of the first deployment arm when the hinge arrangement assumes the normal state. This gives a configuration with a low packaging height. Thus, if the hinge arrangement is used for a bonnet, the first portion of the second deployment arm will be parallel with and vertically above the second portion of the first deployment arm, both extending substantially parallel to the main plane of the bracket portion.

The sliding element may be located at the third pivotal connection in the second deployment arm and/or the bracket portion, preferably in the second deployment arm.

As an alternative or a complement, the hinge arrangement may comprise two sliding elements located at the first pivotal connection and the second pivotal connection.

The hinge arrangement may comprise a locking member pivotally connected to one of the hinge arm and the bracket portion, the locking member being adapted to in a locked state lock the bracket portion in relation to the hinge arm. In an open state of the locking member, the bracket portion is free to move in relation to the hinge arm. The locking member may be pivotally connected to the hinge arm or to the bracket portion.

The locking member may comprise a lock portion adapted to cooperate with the bracket portion in the locked state of the locking member, e.g. a hook shape adapted to grip around a protrusion comprised in the bracket portion in the locked state of the locking member. The hook shape may be open in a direction facing away from the hinge pivot axis/axes. The hook shape and the protrusion together form a lock unit. Alternative lock units are feasible, e.g. a pin entering into an opening. The locking member is preferably biased towards the locked state, e.g. by means of a spring.

A lower portion of the locking member, may, as an option, be utilized to lock the hinge arm in relation to the hinge portion during the movement of the bonnet from the closed position to the deployed position, thereby ascertaining that the hinged connection is inactive.

The hinge arrangement may comprise a lifting member adapted to operate on the bracket portion. The lifting member may be adapted to directly or indirectly operate on the bracket portion, e.g. via an abutment member comprised in the bracket portion, thereby providing the translational displacement of the bracket portion in the vertical and longitudinal directions of the hinge arrangement during the transition of the hinge arrangement between the normal state and the deployed state. The lifting member is preferably located in front of the hinge portion. The lifting member may be a piston released by pyrotechnics and/or a hydraulic system.

The angle between the lifting member and a plane spanned by the longitudinal direction and the transverse direction of the hinge arrangement may be less than 45°. The angle may be in the range between 0° and 40°, preferably in the range between 5° and 35°, more preferably in the range between 10° and 30° and most preferably in the range between 15° and 25°. The low angle contributes to a low packaging height.

The lifting member may be attached to the hinge portion, e.g. via an attachment means, such as a bracket. As an alternative or a complement, the lifting member may be attached to the body of the vehicle. Further, the lifting member may be located either laterally inside of or outside of the hinge portion. The locations laterally inside of and laterally outside of relate to when the hinge arrangement is mounted in the vehicle, laterally inside of meaning that the location is closer to a longitudinal centreline of the vehicle.

The present invention further relates to a bonnet arrangement for a vehicle. The bonnet arrangement comprises a bonnet being displaceable between a closed position and a deployed position located at least upwards, preferably upwards and rearwards, as compared to the closed position, and a hinge arrangement as described herein. The bracket portion of the hinge arrangement is attached, directly or indirectly, to the bonnet, which constitutes the cover mentioned above.

The rear end portion of the bonnet may be adapted to be displaced rearwards by a longitudinal distance dₓᵣ being in the range of 20 mm ≤ dₓᵣ ≤ 200 mm, preferably 40 mm ≤ dₓᵣ ≤ 180 mm, more preferably 60 mm ≤ dₓᵣ ≤ 160 mm in relation to the body of the vehicle during the displacement from the closed position to the deployed position. Further, the rear end portion may be adapted to be displaced upwards by a vertical distance d_{zr} being in the range of 10 mm ≤ d_{zr} ≤ 150 mm, preferably 30 mm ≤ d_{zr} ≤ 130 mm, more preferably 50 mm ≤ d_{zr} ≤ 120 mm in relation to the body of the vehicle during the displacement from the closed position to the deployed position. The distances dₓᵣ and d_{zr} are determined at the rear end of the bonnet. Thereby, it is possible to provide a large enough gap in the deployed position between the bonnet and any hard engine parts.

Correspondingly, the front end portion of the bonnet may be adapted to be displaced rearwards by a longitudinal distance d_{xf} being in the range of 20 mm ≤ d_{xf} ≤ 200 mm, preferably 40 mm ≤ d_{xf} ≤ 180 mm, more preferably 60 mm ≤ d_{xf} ≤ 160 mm in relation to the body of the vehicle during the displacement from the closed position to the deployed position. Further, the front end portion may be adapted to be displaced upwards by a vertical distance d_{zf} being in the range of 5 mm ≤ d_{zf} ≤ 75 mm, preferably 15 mm ≤ d_{zf} ≤ 65 mm, more preferably 25 mm ≤ d_{zf} ≤ 60 mm in relation to the body of the vehicle during the displacement from the closed position to the deployed position. The distances d_{xf} and d_{zf} are determined at the front end of the bonnet. Thereby, it is possible to provide a large enough gap in the deployed position between the bonnet and any hard engine parts.

In the intermediate position, the bonnet is located in a position between the closed position and the deployed position. Typically, the front end portion may be located upwards by a vertical distance d_{zf} being in the range of 5 mm ≤ d_{zf} ≤ 75 mm, preferably 15 mm ≤ d_{zf} ≤ 65 mm, more preferably 25 mm ≤ d_{zf} ≤ 60 mm in relation to the closed position, while the rear end portion may be located upwards by a vertical distance d_{zr} being in the range of 10 mm ≤ d_{zr} ≤ 120 mm, preferably 20 mm ≤ d_{zr} ≤ 100 mm, more preferably 30 mm ≤ d_{zr} ≤ 90 mm.

If the cover is located at a rear end portion or a side end portion of the vehicle, the cover may assume a corresponding deployed position and/or intermediate position, which may be suitable to mitigate the consequences of a collision.

The present invention further relates to a vehicle comprising a hinge arrangement as described herein or a bonnet arrangement as described herein.

The present invention also relates to a method of displacing a bonnet of the bonnet arrangement described herein to a deployed position. The method comprises
- in a first phase, displacing the front end portion of the bonnet to an intermediate position by pivoting at the first, second, third and fourth pivotal connections, and
- in a second subsequent phase, displacing the rear end portion of the bonnet to the deployed position, in which both the front end portion and the rear end portion are raised, by pivoting at the first, second, third and fourth pivotal connections and sliding of at least one of the first, second, third and fourth pivotal connections in the at least one sliding element.

### BRIEF DESCRIPTION OF THE DRAWINGS

The present invention will hereinafter be further explained by means of non-limiting examples with reference to the appended drawings wherein:
- Fig. 1: is a schematic side view of a bonnet arrangement according to the invention, showing a bonnet in a closed, an intermediate, a deployed and an open position, respectively,
- Fig. 2: illustrates a hinge arrangement according to a first embodiment of the invention in an exploded view,
- Fig. 3: illustrates the hinge arrangement of Fig. 2 in a normal state,
- Fig. 4: illustrates the hinge arrangement of Fig. 2 during transition to the deployed state,
- Fig. 5: illustrates the hinge arrangement of Fig. 2 in a deployed state,
- Fig. 6: illustrates the hinge arrangement of Fig. 2 with the bonnet in the open position,
- Fig. 7: illustrates a hinge arrangement according to a second embodiment of the invention in a normal state, and
- Fig. 8: illustrates the hinge arrangement of Fig. 7 in a deployed state.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment.

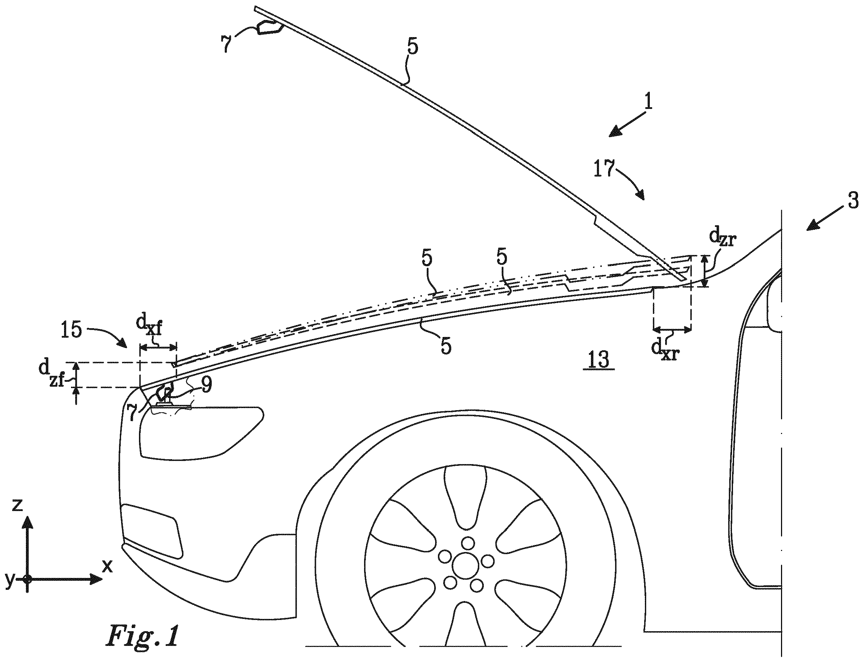

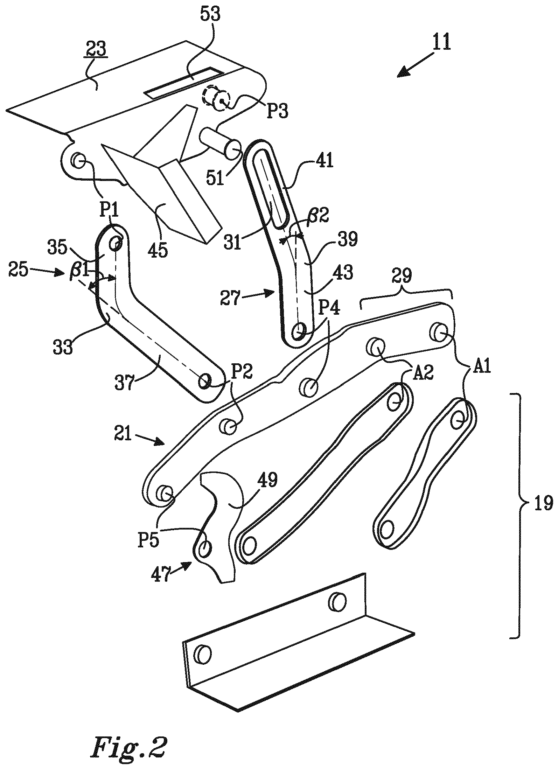

Figure 1 schematically illustrates a bonnet arrangement 1 of a vehicle 3 according to the invention. The vehicle in this case is a car. The bonnet arrangement 1 comprises a bonnet 5, a striker 7, a latch 9 and a hinge arrangement. The bonnet 5 is connected to a body 13 of the vehicle 3 by the striker 7 and the latch 9 at a front end portion 15 of the bonnet 5, and by the hinge arrangement at a rear end portion 17 of the bonnet 5. The hinge arrangement, which is not illustrated in in Figure 1, will be further described below in conjunction with Figures 2-6.

The bonnet 5 is shown in a closed position, see lower continuous line, in an intermediate position, see dashed line, in a deployed position, see dash-dotted line slightly above the dotted line, and in an open position, see upper continuous line.

The closed position of the bonnet 5 is used during normal driving of the vehicle 3 and during parking of the vehicle 3.

The open position of the bonnet 5 permits access to the engine compartment, e.g. for service, maintenance or repair work. In order to reach the open position, the bonnet 5 is pivoted at or adjacent to its rear end portion 17 by means of the hinge arrangement. The bonnet 5 is then displaced directly from the closed position to the open position without passing the intermediate position or the deployed position. When closing the bonnet 5 again from the open position, the opening displacement may be reversed.

The bonnet 5 is also displaceable from the closed position to the deployed position. When moving to the deployed position, the bonnet 5 passes the intermediate position. The intermediate position includes raising the front end portion 15 of the bonnet 5. This may be advantageous if the vulnerable road user hits a front portion of the bonnet 5, which e.g. may be the case, if the vulnerable road user is a child or a short person.

In the deployed position, also called the pop-up position, the rear end portion of the bonnet is further raised. Thereby, the distance between the bonnet 5 and any hard engine parts is increased, which helps to reduce the severity of an accident involving a vulnerable road user being thrown onto the bonnet.

In the deployed position, the rear end of the bonnet 5 is displaced rearwards by a longitudinal distance dₓᵣ and upwards by a by a vertical distance d_{zr} and the front end of the bonnet 5 is displaced rearwards by a longitudinal distance d_{xf} and upwards by a vertical distance d_{zf} as compared to the closed position. Preferably, the bonnet 5 is displaceable from the deployed position back to the closed position, such that the bonnet 5 may be restored to the closed position after the deployed position has been activated.

Usually, there is one hinge arrangement at, or adjacent to, each lateral side of the rear end portion 17 of the bonnet 5. However, one, two, three or more hinge arrangements may be used.

One pair of a striker 7 and a latch 9 may be used. In that case, the pair is preferably located at or adjacent to the centre of the front end portion 15 of the bonnet 5. Often, there is one pair of a striker 7 and a latch 9 at or adjacent to each lateral side of the front end portion 15 of the bonnet 5.

In the embodiment of Figure 1, the striker 7 is attached to the bonnet 5, while the latch 9 is attached to the body 13 of the vehicle 3. As an alternative, not illustrated, the striker 7 may be attached to the body 13 of the vehicle 3 and the latch 9 to the bonnet 5. In any case, the striker 7 and the latch 9 are located such that they can cooperate with each other, when the bonnet 5 is in the closed position and the deployed position, respectively. Figures 2-6 illustrate a hinge arrangement 11 according to a first embodiment of the invention. The illustrated embodiment is for example the hinge arrangement 11 at the rear end portion 17 of the bonnet 5 of Figure 1. Figure 2 illustrates an exploded view of the hinge arrangement 11. The directionality of the hinge arrangement 11 corresponds to the directionality of the vehicle 3, such that a longitudinal direction x of the hinge arrangement corresponds to a longitudinal direction of the vehicle 3, a transverse direction y of the hinge arrangement corresponds to a transverse direction of the vehicle 3 and a vertical direction z of the hinge arrangement corresponds to a vertical direction of the vehicle 3, assuming the vehicle 3 is standing on a horizontal ground.

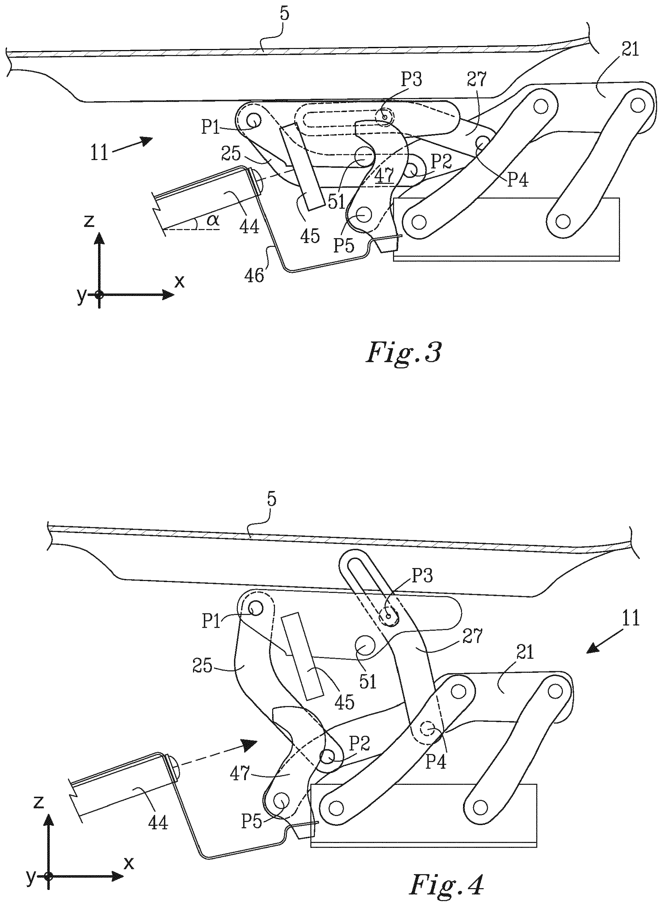

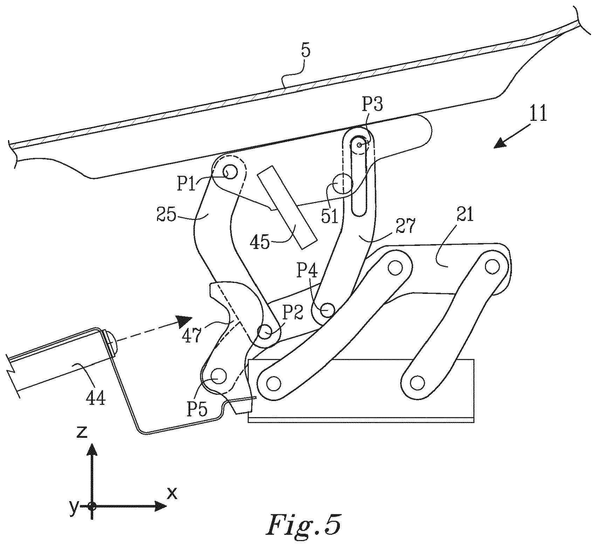

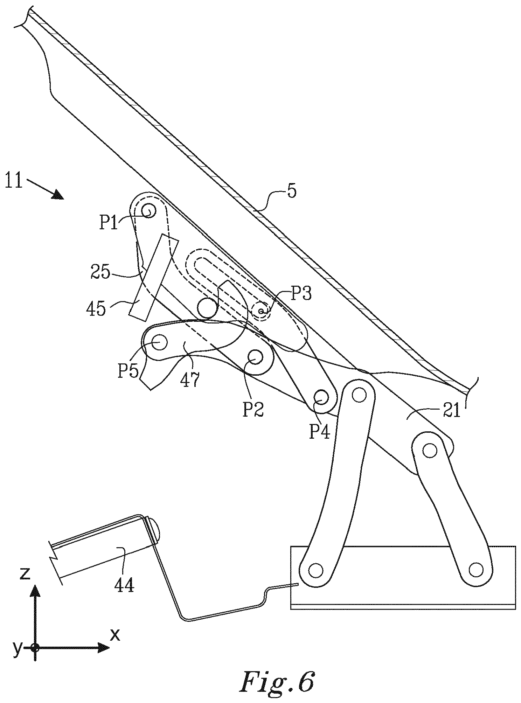

The hinge arrangement 11 is transitable between a normal state, illustrated in Figure 3, corresponding to the bonnet 5 being in the closed position, and a deployed state, illustrated in Figure 5, corresponding to the bonnet 5 being in the deployed position. Figure 4 illustrates the hinge arrangement 11 during the transition while the bonnet 5 is in the intermediate position. In the open position of the bonnet 5, illustrated in Figure 6, and during transition between the closed position and the open position of the bonnet 5, the hinge arrangement 11 is in its normal state.

The hinge arrangement 11 comprises a hinge portion 19 adapted to be directly or indirectly attached to the body 13 of the vehicle 3, a hinge arm 21 pivotally connected to the hinge portion 19, a bracket portion 23 adapted to be directly or indirectly attached to the bonnet 5, as well as a first deployment arm 25 and a second deployment arm 27 pivotally connecting the bracket portion 23 with the hinge arm 21. The pivotal connection between the hinge arm 21 and the hinge portion 19 provides a hinged connection 29 for normal opening of the bonnet 5. In the illustrated embodiment, the first deployment arm 25 is located in front of the second deployment arm 27 and thereby forms a front deployment arm and the second deployment arm 27 forms a rear deployment arm.

The front deployment arm 25 and the rear deployment arm 27 are adapted to control the transition of the hinge arrangement 11 between the normal state and the deployed state. A first part of the front deployment arm 25, here a first end, is pivotally connected to the bracket portion 23 at a first pivotal connection P1. A second part of the front deployment arm 25, here an opposite second end, is pivotally connected to the hinge arm 21 at a second pivotal connection P2. A first part of the rear deployment arm 27, here a first end, is pivotally connected to the bracket portion 23 at a third pivotal connection P3. A second part of the rear deployment arm 27, here an opposite second end, is pivotally connected to the hinge arm 21 at a fourth pivotal connection P4. The rear deployment arm 27 comprises a sliding element in the form of a slot 31, in which the third pivotal connection P3 is slidable.

A bend 33 in the front deployment arm 25 defines a first upper portion 35 of the front deployment arm 25, between the bend 33 and the second pivotal connection P2, and a second lower portion 37, between the bend 33 and the first pivotal connection P1. This is best seen in Figure 2. The lower portion 37 is substantially horizontal when the hinge arrangement 11 assumes the normal state as in Figure 3. The bend 33 has an angle β₁ in the range of 0°-90°, preferably in the range of 30°-60°.

A bend 39 in the rear deployment arm 27 defines a first upper portion 41 of the rear deployment arm 27, between the bend 39 and the fourth pivotal connection P4, and a second lower portion 43, between the bend 39 and the third pivotal connection P3. The bend 39 has an angle β₂ in the range of 0°-90°, preferably in the range of 30°- 60°. The slot 31 is located in the upper portion 41. The upper portion 41 is substantially horizontal when the hinge arrangement 11 assumes the normal state as in Figure 3. Further, the upper portion 41 of the rear deployment arm 27 is parallel to the lower portion 37 of the front deployment arm 25 but located vertically above. This gives a configuration with a low packaging height.

The hinge arrangement 11 comprises one or more hinge pivot axes providing the hinged connection 29 between the bonnet 5 and the body 13 of the vehicle 3 for normal opening of the bonnet 5, i.e. to access the space beneath the bonnet, e.g. for maintenance, service and/or repair. In the illustrated embodiment, the hinge arrangement 11 comprises two hinge pivot axes A1, A2 but it would also be feasible with a single hinge pivot axis or another kind of multi-link configuration according to prior art with a plurality of hinge pivot axes. Further, for a multi-link hinged connection, there may be other portions or elements, such as link arms, located between the hinge portion 19 and the hinge arm 21.

The hinge arrangement 11 further comprises a lifting member 44, e.g. a piston, which may be released by e.g. pyrotechnics and/or a hydraulic system, see Figures 3-6. In the illustrated embodiment, the lifting member 44 is attached to the hinge portion 19 via an attachment means 46 comprising a bracket, but it may alternatively be feasible to attach the lifting member 44 to the body 13 of the vehicle 3. When the lifting member 44 is activated, e.g. when a sensor of the vehicle 3 has indicated a collision with a vulnerable road user or an imminent collision with a vulnerable road user, the lifting member 44 operates on an abutment member 45 comprised in the bracket portion 23 displacing the hinge arrangement 11 to the deployed state. Thereby, the bracket portion 23 is displaced upwards and rearwards in a deployment motion governed by the front deployment arm 25 and the rear deployment arm 27, causing the bonnet 5 to be displaced to its intermediate position and thereafter to its deployed position. This is further described in conjunction with Figures 4 and 5.

The lifting member 44 is arranged at an angle α, which is less than 45°, in relation to a horizontal plane, e.g. a plane spanned by the longitudinal direction x and the transverse direction y of the hinge arrangement 11. The angle α may be in the range between 0° and 40°, preferably in the range between 5° and 35°, more preferably in the range between 10° and 30° and most preferably in the range between 15° and 25°.

The hinge arrangement 11 as described herein provides a hinge arrangement with low packaging height. This is realized by help of the configuration of the front deployment arm 25 and the rear deployment arm 27, e.g. the shapes and dimensions of the deployment arms 25, 27, the bends 33, 39 and the location of the pivotal connections P1, P2, P3, P4. In addition, the relatively low angle α of the lifting member 44, when compared to lifting members in prior art solutions, contributes to the low packaging height.

The hinge arrangement 11 comprises a locking member 47, which may assume a locked state, as is illustrated in Figures 3 and 6, or an open state, as is illustrated in Figures 4 and 5. In the locked state of the locking member 47, it locks the position of the bracket portion 23 in relation to the hinge arm 21. The locking member 47 is pivotally connected to the hinge arm of the hinge portion 19 by means of a fifth pivotal connection P5. An upper portion of the locking member 47 comprises a lock portion constituted by a hook shape 49, which is adapted to grip around a corresponding protrusion 51 comprised in the bracket portion 23 in the locked state of the locking member 47, as may be gleaned from Figure 3. The hook shape 49 is open in a direction facing away from the hinge pivot axes A1, A2 and has an open radius. The hook shape 49 and the protrusion 51 together form a lock unit. Alternative lock units are feasible, e.g. a pin entering into an opening. The locking member 47 is preferably biased towards the locked state, e.g. by means of a spring.

A lower portion of the locking member 47, not illustrated, may, as an option, be utilized to lock the hinge arm 21 in relation to the hinge portion 19 during the movement of the bonnet 5 from the closed position to the deployed position.

Figure 4 illustrates the transition between the normal state, illustrated in Figure 3, corresponding to the bonnet 5 being in the closed position, and the deployed state, illustrated in Figure 5, corresponding to the bonnet 5 being in the deployed position. A sensor of the vehicle 3 has indicated a collision with a vulnerable road user or an imminent collision with a vulnerable road user. The lifting member 44 is then activated and acts on the abutment member 45, which in turn moves the whole bracket portion 23. The locking member 47 is thereby moved to its open state by the movement of the protrusion 51 comprised in the bracket portion 23 out of the open radius of the hook shape 49. During the transition between the normal state and the deployed state, the bracket portion 23 is displaced upwards and rearwards in the deployment motion governed by the front deployment arm 25 and the rear deployment arm 27. The bracket portion 23 comprises an aperture 53 allowing the rear deployment arm 27 to go through the bracket portion 23 during the deployment motion, see Figures 2 and 4.

During the movement of the bonnet 5 from the closed position to the deployed position, there is a first phase, displacing the front end portion 15 of the bonnet 5 to the intermediate position, see Figure 4, and a second subsequent phase further raising the rear end portion 17 of the bonnet 5 to the deployed position, see Figure 5, wherein the first phase is completed before the second phase. The first phase comprises pivoting at the first, second, third and fourth pivotal connections P1, P2, P3, P4. The second phase comprises pivoting at the first, second, third and fourth pivotal connections P1, P2, P3, P4 as well as sliding at the at least one of the first, second, third and fourth pivotal connections P1, P2, P3, P4, here illustrated as sliding at the third pivotal connection P3. Since the first phase only comprises pivoting, and not sliding, the intermediate position with a raised front end portion 15 is quickly reached. Thereafter the rear end portion 17 is further moved, such that the bonnet goes to the deployed position, in which both the front end portion 15 and the rear end portion 17 are adequately raised.

Figure 6 illustrates the hinge arrangement 11 during normal opening of the bonnet 5. The bonnet is opened by rotation in the hinged connection 29. In the illustrated embodiment, the hinge arm 21 is pivoted relative to the hinge portion 19 at the hinged connection 29 by means of the hinge pivot axes A1, A2. The bracket portion 23 is meanwhile in a fixed position relative to the hinge arm 21 during opening of the bonnet with the locking member 47 assuming its locked state described above.

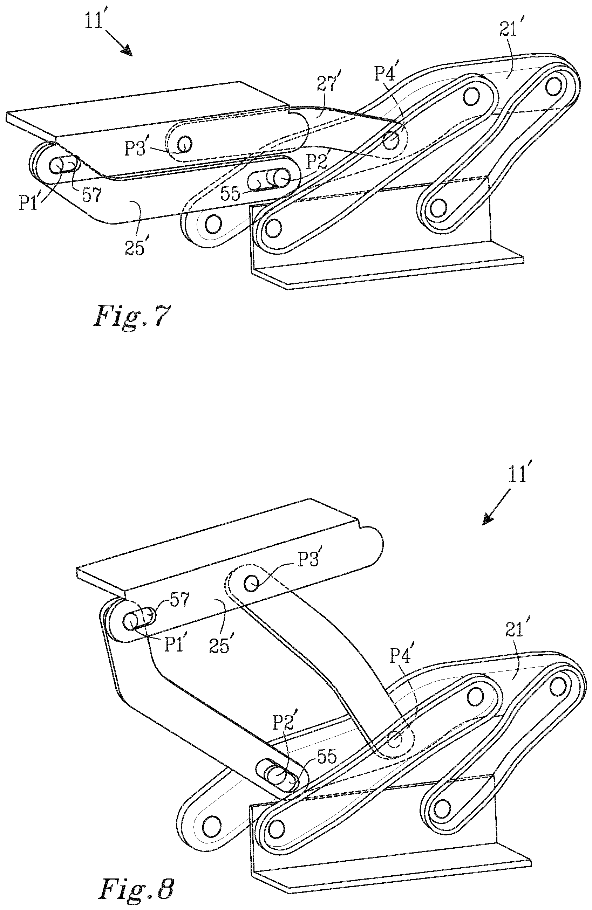

Figures 7 and 8 illustrate a hinge arrangement 11' according to a second embodiment of the invention in a normal state, see Figure 7, and a deployed state, see Figure 8. The second embodiment has most features in common with the first embodiment. Although not illustrated, also the second embodiment of the hinge arrangement 11' may comprise a lifting member and the bracket portion may comprise a corresponding abutment member. However, the second embodiment differs by instead having two slots. A first slot 55 is located in the front deployment arm 25' at the second pivotal connection P2'. A second slot 57 is located in the bracket portion 23 at the first pivotal connection P1'. It would also be feasible to instead have the first slot in the hinge arm 21'. It would further be feasible to instead have the second slot in the front deployment arm 25'.

In the first phase of the the transition from the normal state, see Figure 7, to the deployed state, see Figure 8, the front end portion 15 of the bonnet 5 is displaced to the intermediate position by pivoting at the first, second, third and fourth pivotal connections P1', P2', P3', P4'. The subsequent second phase comprises pivoting at the first, second, third and fourth pivotal connections P1', P2', P3', P4' and sliding at the first and second pivotal connections P1', P2', such that the bonnet assumes the deployed position.

As such, the present invention should not be considered as limited by the embodiments and figures described herein. Rather, the full scope of the invention should be determined by the appended claims, with reference to the description and drawings. Although the illustrated embodiments show a cover in the form of a bonnet at a front end portion of a vehicle in the form of a car, the cover may also be comprised in another type of vehicle. Further, the cover may also be located at a rear end portion or a side end portion of the vehicle.

## Claims

1. A hinge arrangement (11, 11') adapted to be located at a front (15), a rear (17) or a side end portion of a cover (5) of a vehicle (3), said hinge arrangement (11, 11') being transitable between a normal state and a deployed state,
said hinge arrangement (11, 11') comprising
- a hinge portion (19) adapted to be attached, directly or indirectly, to a body (13) of said vehicle (3),
- a hinge arm (21) pivotally connected to said hinge portion (19), thereby providing a hinged connection (29) for normal opening of said cover (5),
- a bracket portion (23) adapted to be attached, directly or indirectly, to said cover (5), and
- a first deployment arm (25) and a second deployment arm (27) pivotally connecting said bracket portion (23) with said hinge arm (21),
a first part of said first deployment arm (25) being pivotally connected to said bracket portion (23) at a first pivotal connection (P1),
a second part of said first deployment arm (25) being pivotally connected to said hinge arm (21) at a second pivotal connection (P2),
a first part of said second deployment arm (27) being pivotally connected to said bracket portion (23) at a third pivotal connection (P3),
a second part of said second deployment arm (27) being pivotally connected to said hinge arm (21) at a fourth pivotal connection (P4),
at least one sliding element, e.g. a slot (31, 55, 57), adapted for sliding of one of said pivotal connections (P1, P2, P3, P4), being located in one of said first deployment arm (25), said second deployment arm (27), said bracket portion (23) and said hinge arm (21) at one of said first, second, third and fourth pivotal connections (P1, P2, P3, P4).

2. The hinge arrangement (11, 11') according to claim 1, wherein
said bracket portion (23) is arranged to be in a fixed position relative to said hinge arm (21) during normal opening of said cover (5), and
said bracket portion (23) is arranged to be displaced, preferably as a whole, in relation to said hinge arm (21) during said transition of said hinge arrangement (11, 11') between said normal state and said deployed state by a deployment motion comprising pivoting at said first, second, third and fourth pivotal connections (P1, P2, P3, P4) and sliding of said pivotal connection (P1, P2, P3, P4) in said at least one sliding element (31, 55, 57).

3. The hinge arrangement (11, 11') according to claim 2, wherein said deployment motion comprises a first phase substantially only comprising pivoting at said first, second, third and fourth pivotal connections (P1, P2, P3, P4), and a second subsequent phase also including sliding in said at least one sliding element (31, 55, 57).

4. The hinge arrangement (11, 11') according to any one of the preceding claims, wherein one of said first deployment arm (25) and said second deployment arm (27) is arranged to be displaceable by pivoting and sliding by means of said at least one sliding element (31, 55, 57), and the other of said first deployment arm (25) and said second deployment arm (27) is arranged to be displaceable by pivoting only.

5. The hinge arrangement (11, 11') according to any one of the preceding claims, wherein said first deployment arm (25) comprises a bend (33) defining a first portion (35), between said bend (33) and said first pivotal connection (P1) and a second portion (37) between said bend (33) and said second pivotal connection (P2), said second portion (37) being substantially parallel to a main plane of said bracket portion (23) when said hinge arrangement (11, 11') assumes said normal state.

6. The hinge arrangement (11, 11') according to any one of the preceding claims, wherein said second deployment arm (27) comprises a bend (39) defining a first portion (41), between said bend (39) and said third pivotal connection (P3) and a second portion (43) between said bend (39) and said fourth pivotal connection (P4), said first portion (41) being substantially parallel to said main plane of said bracket portion (23) when said hinge arrangement (11, 11') assumes said normal state.

7. The hinge arrangement (11, 11') according to claim 5 and 6, wherein, said first portion (41) of said second deployment arm (27) is located parallel with, or substantially parallel with, said second portion (37) of said first deployment arm (25) when said hinge arrangement (11, 11') assumes said normal state.

8. The hinge arrangement (11) according to any one of the preceding claims,
wherein said sliding element (31) is located at said third pivotal connection (P3) in said second deployment arm (27) and/or said bracket portion (23), preferably in said second deployment arm (27).

9. The hinge arrangement (11') according to any one of the preceding claims comprising two sliding elements (55, 57) located at said first pivotal connection (P1') and said second pivotal connection (P2').

10. The hinge arrangement (11) according to any one of the preceding claims,
wherein said hinge arrangement (11) comprises a locking member (47) pivotally connected to one of said hinge arm (21) and said bracket portion (23), said locking member (47) being adapted to in a locked state lock said bracket portion (23) in relation to said hinge arm (21).

11. The hinge arrangement (11) according to claim 10, wherein said locking member (47) comprises a lock portion (49) adapted to cooperate with said bracket portion (23) in said locked state of said locking member, e.g. a hook shape adapted to grip around a protrusion (51) comprised in said bracket portion (23).

12. The hinge arrangement (11, 11') according to any one of the preceding claims comprising a lifting member (44) adapted to operate on said bracket portion (23).

13. A bonnet arrangement (1) for a vehicle (3), said bonnet arrangement (1) comprising
- a bonnet (5) being displaceable between a closed position and a deployed position located at least upwards, preferably upwards and rearwards, as compared to said closed position, and
- a hinge arrangement (11, 11') according to any one of the preceding claims, said bracket portion (23) of said hinge arrangement (11, 11') being attached, directly or indirectly, to said bonnet (5), which constitutes said cover.

14. A vehicle (3) comprising a hinge arrangement (11, 11') according to any one of claims 1-12 or a bonnet arrangement (1) according to claim 13.

15. A method of displacing a bonnet of a bonnet arrangement (1) according to claim 14 to a deployed position, said method comprising
- in a first phase displacing a front end portion (15) of said bonnet (5) to an intermediate position by pivoting at said first, second, third and fourth pivotal connections (P1, P2, P3, P4), and
- in a second subsequent phase, displacing a rear end portion (17) of said bonnet (5) to said deployed position, in which both said front end portion (15) and said rear end portion (17) are raised, by pivoting at said first, second, third and fourth pivotal connections (P1, P2, P3, P4) and sliding of said at least one of said first, second, third and fourth pivotal connections (P1, P2, P3, P4) in said at least one sliding element (31, 55, 57).

## Patentansprüche

1. Gelenkanordnung (11, 11'), die geeignet ist, sich an einem vorderen (15), einem hinteren (17) oder einem seitlichen Endabschnitt einer Abdeckung (5) eines Fahrzeugs (3) zu befinden, wobei die Gelenkanordnung (11, 11') zwischen einem Normalzustand und einem Einsatzzustand überführt werden kann,
wobei die Gelenkanordnung (11, 11') Folgendes umfasst:
- einen Gelenkabschnitt (19), der geeignet ist, direkt oder indirekt an einer Karosserie (13) des Fahrzeugs (3) angebracht zu sein,
- einen Gelenkarm (21), der drehbar mit dem Gelenkabschnitt (19) verbunden ist und dadurch eine gelenkige Verbindung (29) für ein normales Öffnen der Abdeckung (5) bereitstellt,
- einen Winkelabschnitt (23), der geeignet ist, direkt oder indirekt an der Abdeckung (5) angebracht zu sein, und
- einen ersten Einsatzarm (25) und einen zweiten Einsatzarm (27), die den Winkelabschnitt (23) drehbar mit dem Gelenkarm (21) verbinden,
wobei ein erster Teil des ersten Einsatzarms (25) an einer ersten Drehverbindung (P1) drehbar mit dem Winkelabschnitt (23) verbunden ist,
wobei ein zweiter Teil des ersten Einsatzarms (25) an einer zweiten Drehverbindung (P2) drehbar mit dem Gelenkarm (21) verbunden ist,
wobei ein erster Teil des zweiten Einsatzarms (27) an einer dritten Drehverbindung (P3) drehbar mit dem Winkelabschnitt (23) verbunden ist,
wobei ein zweiter Teil des zweiten Einsatzarms (27) an einer vierten Drehverbindung (P4) drehbar mit dem Gelenkarm (21) verbunden ist,
wobei sich wenigstens ein Gleitelement, z.B. ein Schlitz (31, 55, 57), in dem eine der Drehverbindungen (P1, P2, P3, P4) gleiten kann, in dem ersten Einsatzarm (25), dem zweiten Einsatzarm (27), dem Winkelabschnitt (23) oder dem Gelenkarm (21) an der ersten, zweiten, dritten oder vierten Verbindung (P1, P2, P3, P4) befindet.

2. Gelenkanordnung (11, 11') nach Anspruch 1, wobei
der Winkelabschnitt (23) so angeordnet ist, dass er sich in einer festen Position relativ zu dem Gelenkarm (21) während eines normalen Öffnens der Abdeckung (5) befindet, und
der Winkelabschnitt (23) so angeordnet ist, dass er vorzugsweise im Ganzen in Bezug auf den Gelenkarm (21) während der Überführung der Gelenkanordnung (11, 11') zwischen dem Normalzustand und dem Einsatzzustand durch eine Einsatzbewegung verlagert wird, die ein Drehen an der ersten, zweiten, dritten und vierten Drehverbindung (P1, P2, P3, P4) und ein Gleiten der Drehverbindung (P1, P2, P3, P4) in dem wenigstens einen Gleitelement (31, 55, 57) umfasst.

3. Gelenkanordnung (11, 11') nach Anspruch 2, wobei die Einsatzbewegung eine erste Phase, die im Wesentlichen nur ein Drehen an der ersten, zweiten, dritten und vierten Drehverbindung (P1, P2, P3, P4) umfasst, und eine zweite nachfolgende Phase umfasst, die außerdem ein Gleiten in dem wenigstens einen Gleitelement (31, 55, 57) umfasst.

4. Gelenkanordnung (11, 11') nach einem der vorhergehenden Ansprüche, wobei der eine von dem ersten Einsatzarm (25) und dem zweiten Einsatzarm (27) so angeordnet ist, dass er mittels des wenigstens einen Gleitelements (31, 55, 57) durch Drehen und Gleiten verlagerbar ist, und der andere von dem ersten Einsatzarm (25) und dem zweiten Einsatzarm (27) so angeordnet ist, dass er nur durch Drehen verlagerbar ist.

5. Gelenkanordnung (11, 11') nach einem der vorhergehenden Ansprüche, wobei der erste Einsatzarm (25) eine Biegung (33) umfasst, die einen ersten Abschnitt (35) zwischen der Biegung (33) und der ersten Drehverbindung (P1) und einen zweiten Abschnitt (37) zwischen der Biegung (33) und der zweiten Drehverbindung (P2) definiert, wobei der zweite Abschnitt (37) im Wesentlichen parallel zu einer Hauptebene des Winkelabschnitts (23) verläuft, wenn die Gelenkanordnung (11, 11') den Normalzustand einnimmt.

6. Gelenkanordnung (11, 11') nach einem der vorhergehenden Ansprüche, wobei der zweite Einsatzarm (27) eine Biegung (39) umfasst, die einen ersten Abschnitt (41) zwischen der Biegung (39) und der dritten Drehverbindung (P3) und einen zweiten Abschnitt (43) zwischen der Biegung (39) und der vierten Drehverbindung (P4) definiert, wobei der erste Abschnitt (41) im Wesentlichen parallel zu der Hauptebene des Winkelabschnitts (23) verläuft, wenn die Gelenkanordnung (11, 11') den Normalzustand einnimmt.

7. Gelenkanordnung (11, 11') nach Anspruch 5 und 6, wobei der erste Abschnitt (41) des zweiten Einsatzarms (27) parallel oder im Wesentlichen parallel zu dem zweiten Abschnitt (37) des ersten Einsatzarms (25) verläuft, wenn die Gelenkanordnung (11, 11') den Normalzustand einnimmt.

8. Gelenkanordnung (11) nach einem der vorhergehenden Ansprüche, wobei sich das Gleitelement (31) an der dritten Drehverbindung (P3) in dem zweiten Einsatzarm (27) und/oder dem Winkelabschnitt (23), vorzugsweise in dem zweiten Einsatzarm (27), befindet.

9. Gelenkanordnung (11') nach einem der vorhergehenden Ansprüche, umfassend zwei Gleitelemente (55, 57), die sich an der ersten Drehverbindung (P1') und der zweiten Drehverbindung (P2') befinden.

10. Gelenkanordnung (11) nach einem der vorhergehenden Ansprüche, wobei die Gelenkanordnung (11) ein Arretierelement (47), das drehbar mit dem Gelenkarm (21) oder dem Winkelabschnitt (23) verbunden ist, umfasst, wobei das Arretierelement (47) geeignet ist, in einem gesicherten Zustand den Winkelabschnitt (23) in Bezug auf den Gelenkarm (21) zu arretieren.

11. Gelenkanordnung (11) nach Anspruch 10, wobei das Arretierelement (47) einen Arretierabschnitt (49) umfasst, der geeignet ist, in dem arretierten Zustand des Arretierelements mit dem Winkelabschnitt (23) zusammenzuwirken, z.B. eine Hakenform, die geeignet ist, einen in dem Winkelabschnitt (23) umfassten Vorsprung (51) zu umgreifen.

12. Gelenkanordnung (11, 11') nach einem der vorhergehenden Ansprüche, umfassend ein Hubelement (44), das geeignet ist, auf den Winkelabschnitt (23) zu wirken.

13. Motorhaubenanordnung (1) für ein Fahrzeug (3), wobei die Motorhaubenanordnung (1) Folgendes umfasst:
- eine Motorhaube (5), die zwischen einer geschlossenen Stellung und einer Einsatzstellung verlagerbar ist, die im Vergleich zu der geschlossenen Stellung wenigstens nach oben, vorzugsweise nach oben und nach hinten, liegt, und
- eine Gelenkanordnung (11, 11') nach einem der vorhergehenden Ansprüche, wobei der Winkelabschnitt (23) der Gelenkanordnung (11, 11') direkt oder indirekt an der Motorhaube (5), die die Abdeckung darstellt, angebracht ist.

14. Fahrzeug (3), umfassend eine Gelenkanordnung (11, 11') nach einem der Ansprüche 1 bis 12 oder eine Motorhaubenanordnung (1) nach Anspruch 13.

15. Verfahren zum Verlagern einer Motorhaube einer Motorhaubenanordnung (1) nach Anspruch 14 in eine Einsatzstellung, wobei das Verfahren Folgendes umfasst:
- in einer ersten Phase Verlagern eines vorderen Endabschnitts (15) der Motorhaube (5) in eine Zwischenstellung durch Drehen an der ersten, zweiten, dritten und vierten Drehverbindung (P1, P2, P3, P4) und
- in einer zweiten nachfolgenden Phase Verlagern eines hinteren Endabschnitts (17) der Motorhaube (5) in die Einsatzstellung, in der sowohl der vordere Endabschnitt (15) als auch der hintere Endabschnitt (17) angehoben sind, durch Drehen an der ersten, zweiten, dritten und vierten Drehverbindung (P1, P2, P3, P4) und Gleiten der wenigstens einen der ersten, zweiten, dritten und vierten Drehverbindung (P1, P2, P3, P4) in dem wenigstens einen Gleitelement (31, 55, 57).

## Revendications

1. Agencement de charnière (11, 11') conçu pour être situé au niveau d'une partie d'extrémité avant (15), arrière (17) ou latérale d'un couvercle (5) d'un véhicule (3), ledit agencement de charnière (11, 11') pouvant passer entre un état normal et un état déployé,
ledit agencement de charnière (11, 11') comprenant
une partie charnière (19) conçue pour être fixée, directement ou indirectement, à une carrosserie (13) dudit véhicule (3),
un bras de charnière (21) relié de manière pivotante à ladite partie de charnière (19), fournissant ainsi une liaison articulée (29) pour une ouverture normale dudit couvercle (5),
une partie support (23) conçue pour être fixée, directement ou indirectement, audit couvercle (5), et
un premier bras de déploiement (25) et un second bras de déploiement (27) reliant de manière pivotante ladite partie support (23) audit bras de charnière (21),
une première partie dudit premier bras de déploiement (25) étant reliée de manière pivotante à ladite partie support (23) au niveau d'une première liaison pivotante (P1),
une seconde partie dudit premier bras de déploiement (25) étant reliée de manière pivotante audit bras de charnière (21) au niveau d'une deuxième liaison pivotante (P2),
une première partie dudit second bras de déploiement (27) étant reliée de manière pivotante à ladite partie support (23) au niveau d'une troisième liaison pivotante (P3),
une seconde partie dudit second bras de déploiement (27) étant reliée de manière pivotante audit bras de charnière (21) au niveau d'une quatrième liaison pivotante (P4),
au moins un élément coulissant, par exemple une fente (31, 55, 57), conçu pour le coulissement de l'une desdites liaisons pivotantes (P1, P2, P3, P4), étant situé dans ledit premier bras de déploiement (25), ledit second bras de déploiement (27), ladite partie support (23) ou ledit bras de charnière (21) au niveau de l'une desdites première, deuxième, troisième et quatrième liaisons pivotantes (P1, P2, P3, P4).

2. Agencement de charnière (11, 11') selon la revendication 1,
ladite partie support (23) étant conçue pour être dans une position fixe par rapport audit bras de charnière (21) pendant l'ouverture normale dudit couvercle (5), et
ladite partie support (23) étant conçue pour être déplacée, de préférence dans son ensemble, par rapport audit bras de charnière (21) pendant ladite transition dudit agencement de charnière (11, 11') entre ledit état normal et ledit état déployé par un mouvement de déploiement comprenant le pivotement au niveau desdites première, deuxième, troisième et quatrième liaisons pivotantes (P1, P2, P3, P4) et le coulissement de ladite liaison pivotante (P1, P2, P3, P4) dans ledit au moins un élément coulissant (31, 55, 57).

3. Agencement de charnière (11, 11') selon la revendication 2, ledit mouvement de déploiement comprenant une première phase comprenant sensiblement uniquement le pivotement au niveau desdites première, deuxième, troisième et quatrième liaisons pivotantes (P1, P2, P3, P4), et une seconde phase ultérieure comprenant également le coulissement dans ledit au moins un élément coulissant (31, 55, 57).

4. Agencement de charnière (11, 11') selon l'une quelconque des revendications précédentes, l'un dudit premier bras de déploiement (25) et dudit second bras de déploiement (27) étant conçu pour pouvoir être déplacé par pivotement et coulissement au moyen dudit au moins un élément coulissant (31, 55, 57), et l'autre dudit premier bras de déploiement (25) et dudit second bras de déploiement (27) étant conçu pour pouvoir être déplacé par pivotement uniquement.

5. Agencement de charnière (11, 11') selon l'une quelconque des revendications précédentes, ledit premier bras de déploiement (25) comprenant un coude (33) définissant une première partie (35), entre ledit coude (33) et ladite première liaison pivotante (P1) et une seconde partie (37) entre ledit coude (33) et ladite seconde liaison pivotante (P2), ladite seconde partie (37) étant sensiblement parallèle à un plan principal de ladite partie support (23) lorsque ledit agencement de charnière (11, 11') prend ledit état normal.

6. Agencement de charnière (11, 11') selon l'une quelconque des revendications précédentes, ledit second bras de déploiement (27) comprenant un coude (39) définissant une première partie (41), entre ledit coude (39) et ladite troisième liaison pivotante (P3) et une seconde partie (43) entre ledit coude (39) et ladite quatrième liaison pivotante (P4), ladite première partie (41) étant sensiblement parallèle audit plan principal de ladite partie support (23) lorsque ledit agencement de charnière (11, 11') prend ledit état normal.

7. Agencement de charnière (11, 11') selon les revendications 5 et 6, ladite première partie (41) dudit second bras de déploiement (27) étant située parallèlement, ou sensiblement parallèlement, à ladite seconde partie (37) dudit premier bras de déploiement (25) lorsque ledit agencement de charnière (11, 11') prend ledit état normal.

8. Agencement de charnière (11) selon l'une quelconque des revendications précédentes, ledit élément coulissant (31) étant situé au niveau de ladite troisième liaison pivotante (P3) dans ledit second bras de déploiement (27) et/ou ladite partie support (23), de préférence dans ledit second bras de déploiement (27).

9. Agencement de charnière (11') selon l'une quelconque des revendications précédentes comprenant deux éléments coulissants (55, 57) situés au niveau de ladite première liaison pivotante (P1') et de ladite seconde liaison pivotante (P2').

10. Agencement de charnière (11) selon l'une quelconque des revendications précédentes, ledit agencement de charnière (11) comprenant un élément de verrouillage (47) relié de manière pivotante audit bras de charnière (21) ou à ladite partie support (23), ledit élément de verrouillage (47) étant conçu pour, dans un état de verrouillage, verrouiller ladite partie support (23) par rapport audit bras de charnière (21).

11. Agencement de charnière (11) selon la revendication 10, ledit élément de verrouillage (47) comprenant une partie de verrouillage (49) conçue pour coopérer avec ladite partie support (23) dans ledit état verrouillé dudit élément de verrouillage, par exemple une forme de crochet conçue pour saisir une saillie (51) comprise dans ladite partie support (23).

12. Agencement de charnière (11, 11') selon l'une quelconque des revendications précédentes comprenant un élément de levage (44) conçu pour fonctionner sur ladite partie support (23).

13. Agencement de capot (1) pour un véhicule (3), ledit agencement de capot (1) comprenant
un capot (5) pouvant être déplacé entre une position fermée et une position déployée située au moins vers le haut, de préférence vers le haut et vers l'arrière, par rapport à ladite position fermée, et
un agencement de charnière (11, 11') selon l'une quelconque des revendications précédentes, ladite partie support (23) dudit agencement de charnière (11, 11') étant fixée, directement ou indirectement, audit capot (5), qui constitue ledit couvercle.

14. Véhicule (3) comprenant ledit agencement de charnière (11, 11') selon l'une quelconque des revendications 1 à 12 ou agencement de capot (1) selon la revendication 13.

15. Procédé de déplacement d'un capot d'un agencement de capot (1) selon la revendication 14 vers une position déployée, ledit procédé comprenant les étapes consistant à
dans une première phase, déplacer une partie d'extrémité avant (15) dudit capot (5) vers une position intermédiaire en pivotant au niveau desdites première, deuxième, troisième et quatrième liaisons pivotantes (P1, P2, P3, P4), et
dans une seconde phase ultérieure, déplacer une partie d'extrémité arrière (17) dudit capot (5) vers ladite position déployée, ladite partie d'extrémité avant (15) et ladite partie d'extrémité arrière (17) étant soulevées, par pivotement au niveau desdites première, deuxième, troisième et quatrième liaisons pivotantes (P1, P2, P3, P4) et par coulissement de ladite au moins une parmi lesdites première, deuxième, troisième et quatrième liaisons pivotantes (P1, P2, P3, P4) dans ledit au moins un élément coulissant (31, 55, 57).
